# EUROPÄISCHE PATENTSCHRIFT

(11) **EP 2 212 593 B1**
(45) Veröffentlichungstag und Bekanntmachung des Hinweises auf die Patenterteilung: **20.08.2014**
(21) Anmeldenummer: 08844186.0
(22) Anmeldetag: 29.10.2008
(51) Int. Cl.: F16J 15/08, F16L 23/20

(54) **SPREIZDICHTUNG, INSBESONDERE FÜR GASE**
EXPANSION SEAL, ESPECIALLY FOR GASES
JOINT À EXPANSION, EN PARTICULIER POUR DES GAZ

(30) Priorität: 29.10.2007 DE 102007051921; 30.11.2007 DE 102007058126
(43) Veröffentlichungstag der Anmeldung: 04.08.2010
(73) Patentinhaber: Hiss, Ludwig, 79346 Endingen (DE)
(72) Erfinder: Hiss, Ludwig, 79346 Endingen (DE)
(74) Vertreter: Goy, Wolfgang
(86) Internationale Anmeldenummer: PCT/EP2008/009125
(87) Internationale Veröffentlichungsnummer: WO 2009/056290

(56) Entgegenhaltungen:
- EP-A- 0 241 350
- EP-A- 0 711 938
- EP-A- 1 394 450
- WO-A-2007/044201
- CA-A- 698 130
- FR-A- 825 672
- FR-A- 1 537 146
- FR-A- 1 563 153
- US-A- 1 866 160
- US-A- 2 921 608
- US-A- 3 307 861
- US-A- 3 333 723
- US-A- 4 193 617

## Beschreibung

Die Erfindung betrifft ein Dichtungssystem nach dem Oberbegriff des Anspruchs 1.

Eine ausreichende Dichtigkeit zwischen zwei Flächen könnte zwar im Idealfall auch ohne Zuhilfenahme von Dichtungsmaterialien erreicht werden. Dazu müßten aber die abzudichtenden Flächen eine praktisch nicht erreichbare glatte Oberfläche aufweisen bzw. es müßte die Kraft, welche die zu dichtenden Flächen aneinander preßt, so groß sein, daß sämtliche Hohlräume, die noch zwischen den Dichtflächen bestehen, durch Materialfluß so weit eingeebnet werden, daß die Moleküle des zu dichtenden Mediums die entstandenen Grenzzonen zwischen den Dichtflächen nicht mehr passieren können, weil deren Abstand voneinander durchweg geringer ist als der wirksame Moleküldurchmesser des Gases. Versuche haben gezeigt, daß bei derart hohem Druck die Grenzflächen ungleichmäßig verformt werden, so daß sie nach einer Demontage der Flansche nicht mehr abdichtbar sind.

Es ist daher bekannt, zwischen die zu dichtenden Flächen ein weiches Dichtmaterial einzufügen, welches sich beim Zusammenpressen der Gesamtanordnung leicht und flexibel auf die Dichtflächen drücken und in die vorhandenen Hohlräume zwischen den zu dichtenden Flächen eindrücken läßt. Ein Standardprodukt dieses Standes der Technik sind die allseits bekannten O-Ringe, welche in der Regel aus Elastomer- und Polymerkunststoffen, aber auch aus Weichmetall bestehen können. Bisher wurde es als wesentlich erachtet, daß das Dichtungsmaterial eine geringere Mohssche Härte als die Flansche aufweist.

Besondere Schwierigkeiten macht verständlicherweise die Abdichtung von unter hohem Druck oder hohem Vakuum stehenden Verbindungen von Rohren mit Flanschen, wenn das abzudichtende Medium Wasserstoff oder Helium ist, da beide Elemente von allen flüchtigen Stoffen den kleinstmöglichen Moleküldurchmesser aufweisen und somit bei Druckunterschieden auch durch kleinste Undichtigkeiten entweichen können. Bei Wasserstoff ist für die Bemessung der Dichtungssysteme darüber hinaus noch die bekannte Metallpenetration zu berücksichtigen. Die beschriebenen Probleme sind seit langem intensiv untersucht worden, und es sind vielfältige Vorschläge zur Optimierung des Dichtungsverhaltens besonders von Flanschverbindungen von Rohren gemacht worden.

Die meisten Entwicklungen der Hochvakuum- oder Hochdrucktechnik bauen auf eine seit mehr als 40 Jahren bekannte Form der Flanschverbindung für Hochvakuumsysteme mit den oben beschriebenen O-Ringen auf. Diese sind aber in ihren Dichtungseigenschaften gegenüber z.B. Helium um mindestens den Faktor 10⁻⁶ schlechter als Dichtungen aus Metall.

Nach dem oben angeführten Stand der Technik wurden O-Ring-Anordnungen mit Heliumleckraten von allenfalls <10⁻⁶ mbar l s⁻¹ erreicht. Dies ist gegenüber heutigen wissenschaftlichen und technischen Anforderungen jedoch nicht mehr ausreichend. Heute werden zum Teil Leckraten von weniger als 10⁻¹⁰ mbar l s⁻¹ gefordert.

Die WO 2007/044201 A1 zeigt in Fig. 21 ein Dichtungssystem zwischen zwei Flanschen der eingangs angegebenen Art. Als Abdichtung dient ein Dichtung. Um den Umfang herum weist dieser Dichtung V-förmig abstehende Schenkel auf. Der Dichtung besteht dabei aus einem geschmeidigen Material.

Die US 4 193 617 A zeigt ein weiteres Dichtungssystem. Bei der Ausführungsform in Fig. 14 sind zwei flach miteinander verbindbare Flansche mit entsprechenden Dichtflächen vorgesehen. Zwischen diesen Dichtflächen befindet sich ein Dichtung. Dessen Umfang weist radial nach innen gerichtete Schenkel auf, welche an Schultern der Flansche anliegen. Zusätzlich zu diesem Dichtung sind noch O-Ringe als weiteres Dichtsystem vorgesehen.

Der Erfindung liegt die **Aufgabe** zugrunde, bei einem Dichtungssystem der eingangs angegebenen Art die Dichtwirkung der Abdichtung zu verbessern.

Die technische **Lösung** ist gekennzeichnet durch die Merkmale des Anspruchs 1. Vorteilhafte Weiterbildungen ergeben sich aus den Unteransprüchen.

Die erfindungsgemäße Dichtvorrichtung hat den Vorteil, daß sie auf überaus einfache technische Weise eine außerordentlich gute Dichtwirkung zwischen den miteinander zu verbindenden Rohrenden erzielt. Dies wird dadurch erreicht, daß die V-förmig abgespreizten Schenkel der O-ringförmigen Dichtung gestaucht werden. Aus dieser Stauchwirkung resultiert die Dichtkraft an den Dichtstellen. Aufgrund des kreisförmigen oder kreisähnlichen Querschnitts der Schenkel am vorderen Dichtende sind diese Dichtstellen auf eine sehr kleine Fläche konzentriert und erzeugen daher einen sehr großen Druck. Der durch die Stauchkraft hervorgerufene Materialfluß wirkt dabei vornehmlich in Richtung der Dichtflächen.

Die Lösung der Aufgabe beruht auf der überraschenden Erkenntnis, daß sich das zwischen ebenen Dichtungsflächen wie bei Flanschen mit glatten Oberflächen in Form eines flachen Rings mit rechteckigem Querschnitt benutzte Dichtmaterial bezogen auf die Verteilung im Querschnitt unter Druck so verteilt, daß es radial nach außen "fließt" und sich dabei bleibend plastisch verformt. Daraus kann geschlossen werden, daß sich Materialien, die sich unter den Preßbedingungen elastisch verhalten, schlechter eignen. Elastische Materialien sperren sich gegen eine Verformung. Plastische Materialien fließen hingegen unter extremem Druck in vorhandene Mulden der Dichtfläche ein und füllen diese bleibend restlos aus. Unter hohem Druck wächst nun bei der Verformung der Außendurchmesser des Dichtungsrings relativ stärker als der Innendurchmesser. Das Volumen des im Querschnitt rechteckigen auf einer ebenen Fläche flach aufliegenden Dichtungsrings ändert sich also unter dem Druck eines Stempels so, daß sich ein größerer Teil der Dichtungsmasse radial nach außen verschiebt, als durch eine geometrisch gleichmäßige Verteilung zu erwarten gewesen wäre. Diesen Effekt des radialen Flusses der Dichtungsmasse nach außen machte sich bereits der Stand der Technik zu Nutze, indem der ansonsten glatte Fluß des Dichtungsmaterials durch gegenläufige treppenartige Stufen zwischen den Auflageflächen so erschwert wird, daß sich an den durch die Treppen gebildeten senkrechten Sperrflächen ein unerwartet hoher Druck aufbaut, der seinerseits die Wirksamkeit des Dichtungsmaterials stark erhöht.

Hieraus ergibt sich auch die Kenntnis, daß die wesentliche Abdichtung durch die erfindungsgemäßen Maßnahmen überraschend nicht an den Stempelflächen sondern an denjenigen Flächen stattfindet, die parallel zur Richtung des eigentlichen Preßdrucks und senkrecht auf den Stempel- und Flanschebenen stehen. Daraus ergibt sich, daß es auf die nach bekanntem Stand der Technik als einzig wichtig angesehene Abdichtung des Zwischenraums sich gegenüberstehender Flanschebenen nur in zweiter Linie ankommt. In Anwendung dieser Erkenntnis werden überraschend auch die Ansprüche an die Glätte der Oberflächen der Dichtungselemente stark reduziert und zudem auch keine zusätzlichen Oberflächenbehandlungsmittel wie Fette, Öle, Silikone oder ähnliche Gleitmittel zur Erzielung der gewünschten Dichtigkeit benötigt.

Bei Versuchen hat sich ergeben, daß durch die oben beschriebene Ausgestaltung von Dichtungselementen eine bisher kaum für möglich gehaltene Verbesserung der Dichtungseigenschaften, insbesondere bei hochflüchtigen Gasen wie Wasserstoff oder Helium, zu erreichen ist. Diese Dichtung hat nämlich gegenüber üblichen Heliumleckraten (10⁻⁶ mbar l s⁻¹) eine Verbesserung auf zwischen 10⁻⁹ mbar l s⁻¹ und 10⁻¹² mbar l s⁻¹ ergeben. Als Dichtungsmaterial eignen sich besonders Zinn, Blei, Indium, Gold und weitere Weichmetalle wie Kupfer und Aluminium. Auch entsprechend weiche Legierungen von Metallen sind geeignet. Die Metalle und Legierungen sollten eine Härte nach Mohs zwischen 1 und 3 aufweisen, bevorzugt zwischen 2 und 3. Besonders wichtig ist es, daß sich bei der geschlossenen Dichtung die sich gegenüberliegenden Flansche kraftschlüssig mechanisch berühren und somit fest aneinander liegen. Hierdurch wird sichergestellt, daß die Dichtung selbst völlig frei gehalten wird von von außen wirkenden Kräften, die die Dichtungsqualität stark verschlechtern können.

Es wurde nun gefunden, daß sich durch eine besondere Gestaltung von Dichtungsringen und Flanschen eine noch bessere, beinahe absolute Dichtigkeit erzielen läßt. Überraschend wurde auch gefunden, daß das an sich äußerst elastische Material Stahl unter extrem starkem Druck plastische Eigenschaften annimmt, die es aufgrund des druckbedingten Materialflusses ermöglichen, Stahlarmaturen mit ebenfalls aus Stahl bestehenden Dichtungen zu versehen.

So kann Homogenität von Flansch- und Dichtungsmaterial unter gleichzeitiger Verbesserung der Dichteigenschaften erreicht werden. Diese Möglichkeit wurde von der Fachwelt bisher nicht einmal in Erwägung gezogen. Denn bisher galt als ungeschriebenes Gesetz, daß Flanschdichtungen weicher und verformbarer sein müssen als das abzudichtende Flanschmaterial. Es wird hier das Prinzip der ungleichen Materialverteilung in einem O-Ring unter Druck genutzt. Auch hier wird der zur Abdichtung wirksame Materialschluss an den etwa senkrecht zum Pressdruck stehenden Innenflächen der in einem Flansch angebrachten Vertiefung ausgenutzt.

Der Gegenstand der Erfindung wird durch die Beschreibung und die zugehörigen Abbildungen im Folgenden näher erläutert. Beschreibung der Abbildungen:
- Fig. 1: Funktion und Wirkungsweise der Spreizdichtung.
- Fig. 2: Praktische Ausführung einer Flanschdichtung.
- Fig. 3: Verdrehgesicherte Spreizdichtung vor der Pressung.

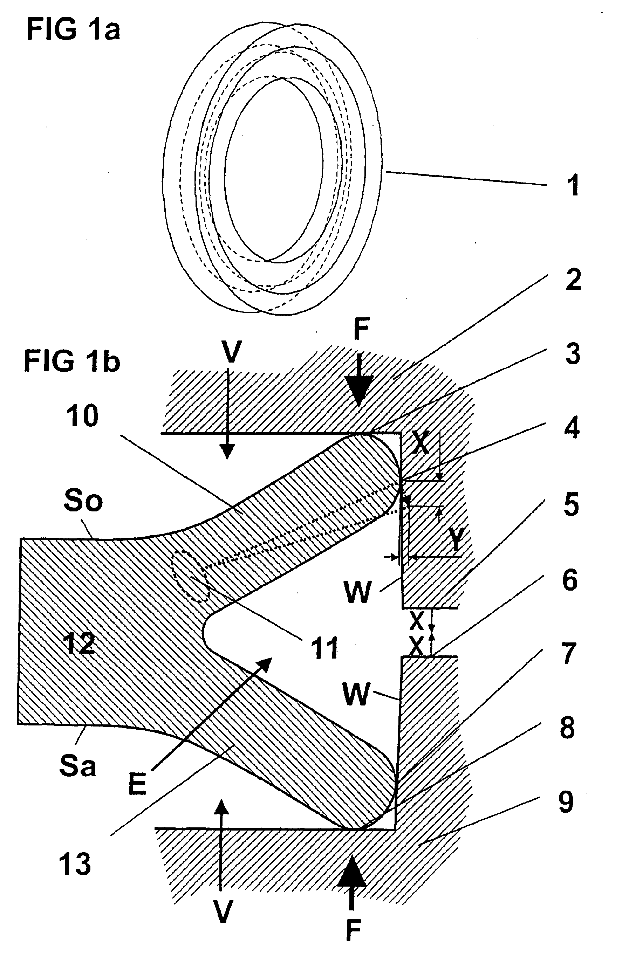

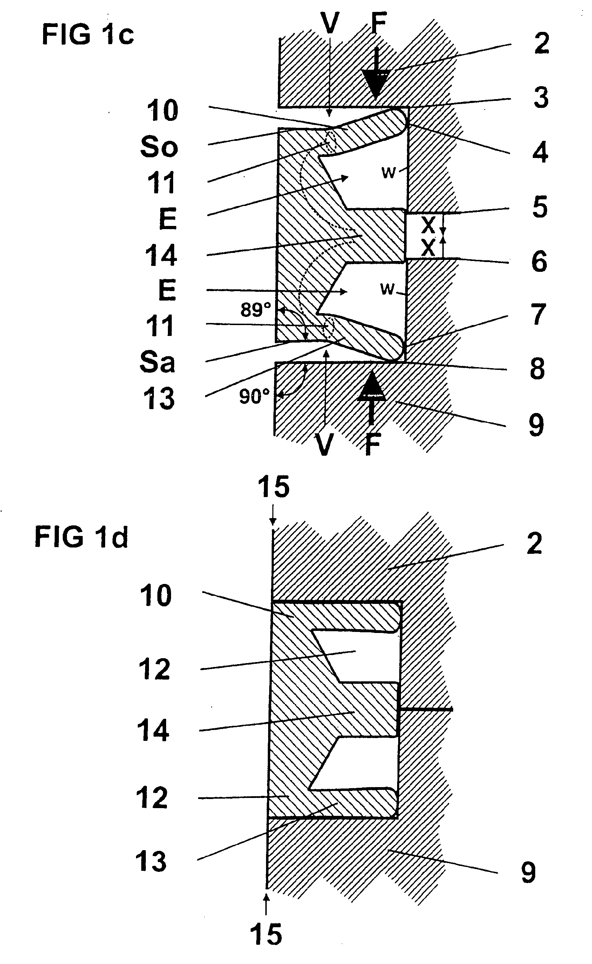

Fig. 1a zeigt in dreidimensionaler Darstellung schematisch die Spreizdichtung. Funktion und Wirkungsweise werden anhand der Fig. 1a, 1b, 1c und 1d erläutert.

Die Dichtung 12 besteht aus keilförmig gespreizten Schenkeln 10, 13, die im gemeinsamen Querschnitt enden.

Dargestellt ist die Dichtung 12 in vormontiertem Zustand mit den angrenzenden dichtenden Flanschen 2, 9. Die Dichtung 12 liegt zunächst ungepreßt an den äußeren Berührungspunkten 3, 8 an und wird gleichzeitig von den senkrecht dazu angeordneten Grenzflächen (Innenwand W) an den Berührungspunkten 4, 7 zentriert, wobei der Außendurchmesser der beiden Schenkel 10, 13 und die Innendurchmesser der zuletzt genannten Flanschflächen als Spielpassung dimensioniert werden.

Durch die angedeutete kraftmäßige Druckeinwirkung F bewegen sich beim Abdichtvorgang die Flansche 2, 9 aufeinander zu, bis sie an den Stirnflächen 5, 6 zur Deckung gelangen. Die dabei zurückgelegte Strecke beträgt 2 mal X hat bei Bewegung der Schenkel 10, 13 um den ortsstabilen Ursprung 11 [dieser ist nur amn Schenkel 10 eingezeichnet] zur Folge, daß die Schenkel 10, 13 zwischen den tangentialen Berührungspunkten 4, 7 und dem ortsstabilen Ursprung 11 um die aufgezeigte Strecke Y gestaucht werden. Aus dieser Stauchwirkung resultiert die Dichtkraft an den sich berührenden Dichtstellen der Berührungspunkte 4, 7. Zusätzlich entsteht an den Berührungspunkten 3, 8 durch die Presskraft (Druckeinwirkung F) eine weitere Dichtstelle.

Die dichtenden Enden der Schenkel 10, 13 - die in praxi Scheiben sind - besitzen hier einen kreisförmigen oder kreisähnlichen Querschnitt. Sie liefern ausgelöst von den aufgezeigten Dichtkräften die geringste Oberflächenverformung an den Dichtstellen. Untersuchungen zeigen durch Materialfluß bewirkte Veränderungen im mikroskopischen Bereich, die auf die flachen Flanschflächen oberflächenglättend wirken und somit die Voraussetzung für eine ideale Abdichtung schaffen.

Der ortsstabile Ursprung 11 kann in einer rotationssymmetrischen Anordnung sehr materialsparend ausgeführt werden, da der durch die aufgezeigte Stauchkraft hervorgerufene Materialfluß der Schenkel 10, 13 vornehmlich in Richtung der Dichtflächen wirkt und durch den Gewölbeeffekt des Bereichs der Dichtung 12 statisch besonders gut abgestützt wird.

Die Verformung der Spreizdichtung ist insofern irreversibel, als nach Demontage der Flansche 2, 9 beim erneuten Zusammenfügen neue Dichtungen 12 eingesetzt werden müssen.

Zur besseren Demontierbarkeit der "Gleichmetalldichtung" (d.h. Dichtung und Flansche bestehen aus dem gleichen Material) nach dem Lösen der Verbindung können die Flanschflächen an den dichtenden Berührungsstellen 4, 7 mit einer geringen Neigung in Richtung der Stirnflächen 5, 6 der Flansche 2, 9 versehen werden.

Die Fig. 1c und 1d zeigen eine weitere Ausgestaltung der Fig. 1a. Diese unterscheidet sich durch einen zusätzlichen mittig angeordneten Ring 14, der die Dichtung 12 durch Ausbildung weiterer druckstabilisierender Brückenbögen zu den Schenkeln 10, 13 statisch weiter verbessert. Es hat sich gezeigt, daß die Dichtungen um die in Fig. 1c gestrichelt angedeuteten Bereiche [ortsstabiler Ursprung 11] einer erheblichen durch den Preßvorgang erzeugten Druckbelastung unterliegen. Der mittige Ring 14 unterstützt die gleichmäßige Verteilung der Kräfte auf die Berührungspunkte 4, 7 und verbessert so die Dichtungsfähigkeit des Systems weiter. Wie aus Fig. 1d ersichtlich, ist auch das unerwünschte Volumen (Vertiefung V) nach dem Preßvorgang praktisch verschwunden. Die Innenwand 15 des Rohres ist somit auch im kritischen Bereich der Dichtung nicht nur homogen in Bezug auf das verwendete Material, sondern auch glatt und frei von strömungsbehindernden Vorsprüngen oder Vertiefungen der Rohrwand.

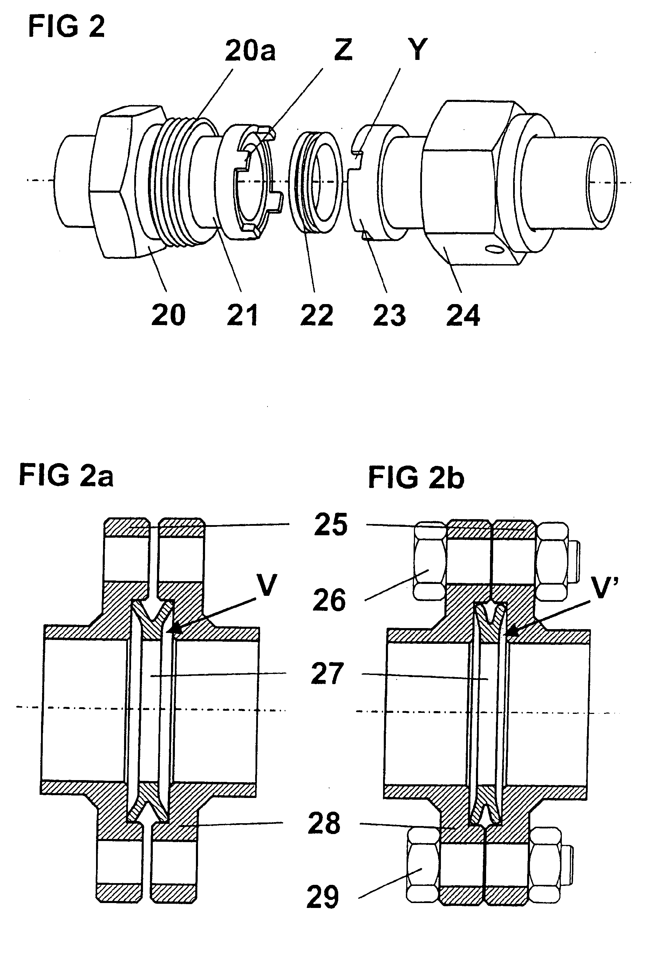

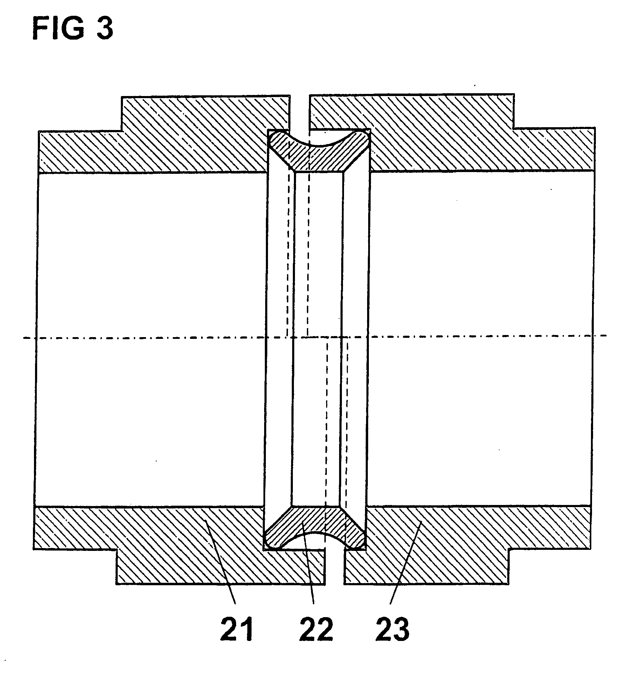

Die Fig. 2 zeigt eine praktische Ausführungsform der Dichtverbindung, die durch die Verzahnung Z, Y verdrehsicher ausgestaltet ist und bei der die Dichtung 22 mittels der auf das Gewinde 20a aufschraubbaren Hohlmutter 24 verpressbar ist (vgl. auch Fig. 3).

Die Fig. 2a und 2b veranschaulichen im Querschnitt eine ebenfalls verdrehsichere Ausführungsform, die mit zwei oder mehreren Schraubenbolzen zusammengefügt ist.

Die Anordnung einer weiteren, verdrehsicheren Rohrdichtung ist in der Fig. 3 dargestellt.

Die dichten Flansche 2, 9 haben überraschend eine besonders gewünschte und wichtige Eigenschaft. Sie sind auch unter Belastung (heftige Bewegung des Rohrsystems beispielsweise durch Maschinen) unerwartet dichtbeständig und weisen auch bei starker Belastung kaum Verschlechterungen der Dichtungseigenschaften auf. Im Falle der Homogenität, d.h. bei gleichartigem Flansch- und Dichtungsmaterial ist eine Stabilität erreichbar, die Schweißverbindungen gleicht. Dies gilt sowohl für Torsions- als auch Biegebelastungen.

### Fazit:

Die erfindungsgemäße Lösung der zugrundeliegenden Aufgabe wird bei dem erfindungsgemäßen Dichtring dadurch erreicht, daß eine Ringdichtung (O-Ring) um deren äußeren Umfang einen radialen keilförmigen Einschnitt E erhält, dessen Schenkel 10, 13 so weit gespreizt werden, daß der zunächst in Bezug auf die Vertiefung V des Flansches 2, 9, in den die Dichtung 12 eingesetzt werden soll, geringfügig zu groß bemessene Radius bzw. Umfang der Dichtung 12 so weit verringert wird, daß sich der Ring passgenau in die für ihn vorgesehene Vertiefung V dieses Flansches 2, 9 einsetzen lässt. Die Dichtung 12 erhält so an dessen äußerem Rand eine - seitlich gesehen - gleichmäßige Y-förmige Weitung nach oben und unten und bekommt so eine Form, die einer Radfelge ähnelt. Die Form dieser Art ist schematisch in Fig. 1 dargestellt. Der Y-förmige Einschnitt E ist besonders in den Fig. 1b bis 1d im Schnitt erkennbar.

Die Erfindung betrifft somit ein neuartiges Ringdichtungssystem für Flanschverbindungen von Rohren. Die Schenkel 10, 13 des keilförmigen Einschnitts E der Dichtung 12 werden bei deren ungehinderter Kompression beim Abdichtvorgang verformt, wobei Durchmesser und Umfang des Ringes vergrößert werden. Wenn die Schenkel 10, 13 aber in eine radiale Vertiefung V von Flanschen 2, 9 genau eingepaßt sind und der Preßvorgang einen hohen Druck auf die Dichtung 12 ausübt, wird durch die Ausdehnung des Rings ein starker Druck auf die senkrecht zum eigentlichen Preßdruck stehenden Innenwände dieser radialen Vertiefungen ausgeübt, der letztlich eine praktisch absolute Abdichtung auch gegen Helium und Wasserstoff bewirkt.

Als besonders günstig hat sich gemäß Fig. 1a eine Anordnung der die Dicke der Dichtung 12 in der inneren Zone überragenden Schenkel 10, 13 erwiesen, bei der die Achsen der Schenkel 10, 13 vor dem Pressvorgang mit der Innenwand W des Flansches 2, 9 einen Winkel von etwa 45° bilden. Diese Anordnung ist besonders bevorzugt, weil die sich die beim Preßvorgang ausbildenden Kräfte dadurch gleichmäßig auf die beiden Schenkel 10, 13 verteilen und somit senkrecht zueinander zwei Dichtzonen ausbilden, die zusammen eine besonders gute Dichtigkeit erzielen. In diesem Fall stehen die beiden den Schenkeln 10, 13 der Fig. 1b entsprechenden Scheiben vor dem Pressen in einem Winkel von 90° zueinander.

Eine verdrehungssichere Flanschverbindung zur besseren Handhabung wird dadurch erreicht, daß der in Fig. 1b mit xx bezeichnete Freiraum vor dem Preßvorgang unsymmetrisch, d.h. auf jedem Halbkreis des Umfangs in unterschiedlicher Höhe, angebracht ist.

Eine Anordnung mit einer Reihe gestufter Teilkreise ist in Fig. 3 im Querschnitt abgebildet.

Betrachtet man die Bewegung der gebildeten Schenkel 10, 13 als einen sich um den ortsstabilen Ursprung 11 bewegenden Vektor, so ergeben sich beim Zusammenpressen Verkürzungen der horizontalen bzw. Verlängerungen der vertikalen Vektoranteile.

Wie oben beschrieben, ist dieser Effekt Basis der erzielten außergewöhnlichen Dichtwirkung. Diese wird - mit anderen Worten - erreicht, indem die Schenkelenden (Berührungspunkte 4, 7) durch die zu dichtenden Komponenten an einer vertikalen Ortsveränderung gehindert werden. Oben und unten in Bezug auf vertikale Ausdehnung ortsfest, erfahren die Schenkel 10, 13 an den Berührungspunkten 4, 7 zu den Flanschen 2, 9 somit eine Stauchung. Die damit verbundene Stauchkraft ist ursächlich für die enorme Dichtkraft der Konstruktion.

Dieses Dichtungsprinzip wurde bei Versuchen als Rohrleitungssystem mit Dichtflanschen beispielhaft homogen in Edelstahl ausgeführt. Die resultierende Gasdurchlässigkeit hat sich als weit unterhalb der zuverlässigen Nachweisgrenze handelsüblicher Heliumlecksucher von <10 ⁻¹¹ mbar l s⁻¹ erwiesen.

Alle weiteren Eigenschaften der Dichtung aus dem Material der Rohrleitung wurden durch den Dichtungsvorgang nicht verändert. Ein bisher nicht erreichbarer Vorteil der Materialhomogenität von Flansch 2, 9 und Dichtmittel besteht in der Korrosionsfestigkeit des Dichtungsbereichs, in dem sich keine Lokalelemente mehr ausbilden können, die immer erhöhter Korrosion ausgesetzt sind.

Bevorzugt sind somit Ausführungen der Erfindung, bei denen Dichtungen 12 und Flansche 2, 9 aus dem gleichen oder mindestens sehr ähnlichem Metall, insbesondere normalem Stahl oder Edelstahl bestehen.

Der in den Fig. 1b bis 1d mit V gekennzeichnete Raum (Vertiefung) zwischen den Schenkeln 10, 13 und den Ebenen der Flansche 2, 9 ist von größerer Bedeutung. Dieser Raum sollte nach der Abdichtung ein möglichst geringes Restvolumen aufweisen, in welchem die Änderungen der Zusammensetzung des abzudichtenden Mediums zurückgehalten werden könnten. Die dort zurückgehaltenen Reste des Mediums werden verzögert "ausgespült", so daß diese Reste kontaminierend wirken könnten. Dies ist besonders für pharmazeutische oder analytische Anlagen von Bedeutung. Gemäß den Fig. 2a und 2b ist es durch geschickte Anordnung und Formung der Schenkel 10, 13 leicht möglich, diesen unerwünschten Effekt praktisch vollkommen zu unterdrücken. Dies ist in Fig. 1d besonders deutlich sichtbar.

Die Herstellung der erfindungsgemäßen Dichtungen 12 erfolgt in bekannter Weise durch Fräsen oder Drehen entsprechender massiver Grundkörper. Da außer dem Einsetzen der Dichtung 12 sonst keinerlei Montagearbeiten anfallen, ist das System sehr kostengünstig.

### Bezugszeichenliste

- 1: Spreizdichtung
- 2: Flansch
- 3: Berührungspunkt
- 4: Berührungspunkt
- 5: Stirnfläche
- 6: Stirnfläche
- 7: Berührungsfläche
- 8: Berührungsfläche
- 9: Flansch
- 10: Schenkel
- 11: Ursprung
- 12: Dichtung
- 13: Schenkel
- 14: Ring
- 15: Innenwand
- 20a: Gewinde
- 22: Dichtung
- 24: Hohlmutter

- E: Einschnitt
- F: Druckeinwirkung
- So: obere Oerfläche
- Sa: untere Oberfläche
- V: Vertiefung
- W: Innenwand
- Y: Strecke
- Z: Verzahnung

## Patentansprüche

1. Dichtungssystem,
wobei dieses Dichtungssystem aus zwei Rohren sowie aus einer Dichtung (12) besteht und zum Abdichten der zwei miteinander zu verbindenden Rohrenden der Rohre mit dazwischen angeordneter Dichtung (12) dient,
wobei die beiden Rohrenden jeweils einen Flansch (2, 9) mit einer in der Flanschebene ausgebildeten Vertiefung (V) aufweisen,
wobei diese Vertiefungen (V) jeweils senkrecht zur Rohrachse eine erste, durch den Boden der Vertiefung (V) gebildete Dichtfläche sowie senkrecht zur Flanschebene eine zweite, durch die Innenwand (W) der Vertiefung (V) gebildete Dichtfläche definieren und wobei die planar um den Rohrduchlaß, in die Vertiefungen (V) der Flansche (2, 9) paßgenau einfügbare O-ringartige Dichtung (12) aus festem, flachem Dichtungsmaterial vorgesehen ist,
welche um ihren gesamten äußeren Umfang parallel zu dessen oberer (So) und unterer (Sa) Oberfläche einen keilförmigen Einschnitt (E) mit V-Profil aufweist und
wobei die radial nach außen weisenden, gespreizten Schenkel (10, 13) des V-Profils die Dicke der inneren Ringzone mindestens an deren Enden überragen,
**dadurch gekennzeichnet,**
**daß** die Dichtung (12) und die Flansche (2, 9) aus dem gleichen Material bestehen,
**daß** die dichtenden Enden der Schenkel (10, 13) des V-Profils einen kreisförmigen oder kreisähnlichen Querschnitt aufweisen und
**daß** in der Dichtstellung des Dichtungssystems die dichtenden Enden der beiden Schenkel (10, 13) der Dichtung (12) jeweils über einen ersten, eine erste Dichtstelle definierenden Berührungspunkt (3, 8) an der ersten Dichtfläche sowie über einen zweiten, eine weitere Dichtstelle definierenden Berührungspunkt (4, 7) an der zweiten Dichtfläche dichtend anliegen, wobei zwischen den beiden Berührungspunkten (3, 8; 4, 7) der Schenkel (10, 13) jeweils ein Zwischenraum besteht.

2. Dichtungssystem nach dem der vorhergehenden Anspruch,
**dadurch gekennzeichnet,**
**daß** der Winkel des V-Profils 70° bis 100°, bevorzugt 90° beträgt.

3. Dichtungssystem nach einem der vorhergehenden Ansprüche,
**dadurch gekennzeichnet,**
**daß** die Dichtung (12) und die Flansche (2, 9) aus normalem Stahl oder Edelstahl bestehen.

4. Dichtungssystem nach einem der vorhergehenden Ansprüche,
**dadurch gekennzeichnet,**
**daß** die O-ringartige Dichtung (12) zwischen den beiden Schenkeln (10, 13) zusätzlich einen mittig angeordneten Ring (14) aufweist.

## Claims

1. A sealing system,
wherein this sealing system consists of two pipes as well as one seal (12) and serves to seal the two pipe ends of the pipes that are to be connected to each other, with the seal (12) being arranged therebetween,
wherein the two pipe ends each comprise a flange (2, 9) having a recess (V) formed in the flange plane,
wherein these recesses (V) each define a first sealing surface perpendicular to the pipe axis, said first sealing surface being formed by the bottom of the recess (V), as well as a second sealing surface perpendicular to the flange plane, said second sealing surface being formed by the inner wall (W) of the recess (V), and
wherein the O-ring-type seal (12) that can be inserted into the recesses (V) of the flanges (2, 9) in an accurately fitting manner and planar around the pipe culvert is provided to be made of a strong flat sealing material, the O-ring-type seal (12) comprising around its complete outer perimeter a tapered groove (E) with a V-shaped section in parallel to the upper (So) and the lower (Sa) surfaces thereof, and
wherein the legs (10, 13) of the V-shaped section that are spread apart and arranged in a radially outward direction project above the thickness of the inner ring zone at the ends thereof,
**characterised in that**
the seal (12) and the flanges (2, 9) consist of the same material,
the sealing ends of the legs (10, 13) of the V-shaped section comprise a circular or circle-like cross-section, and
in the sealing position of the sealing system, the sealing ends of the two legs (10, 13) of the seal (12) each rest in a sealing manner against the first sealing surface via a first contact point (3, 8) that defines a first sealing site and against the second sealing surface via a second contact point (4, 7) that defines a further sealing site, wherein there is a gap each between the two contact points (3, 8; 4, 7) of the legs (10, 13).

2. The sealing system according to the preceding claim,
**characterised in that**
the angle of the V-shaped section is 70° to 100°, preferrably 90°.

3. The sealing system according to any one of the preceding claims,
**characterised in that**
the seal (12) and the flanges (2, 9) consist of normal steel or stainless steel.

4. The sealing system according to any one of the preceding claims,
**characterised in that**
the O-ring-type seal (12) additionally comprises a ring (14) that is centrally arranged between the two legs (10, 13).

## Revendications

1. Système de joint, sachant que ce système de joint est composé de deux tubes et d'un joint (12) et sert à étanchéifier les deux extrémités des tubes à relier entre elles avec le joint (12) placé entre,
dans lequel les deux extrémités de tube présentent respectivement une bride (2, 9) avec un évidement (V) formé dans le plan de la bride,
dans lequel ces évidements (V) définissent respectivement une première surface étanche formée par le fond de l'évidement (V) perpendiculairement à l'axe du tube, et une seconde surface étanche formée par la paroi intérieure (W) de l'évidement (V) perpendiculairement au plan de la bride, et dans lequel le joint (12) de type joint torique planaire autour de la percée du tube, pouvant être inséré de façon ajustée dans les évidements (V) de la bride (2, 9), est prévu en matériau de joint solide et plat,
lequel présente sur tout son pourtour extérieur parallèlement à sa surface de dessus (So) et de dessous (Sa), une entaille en coin (E) avec un profil en V et
sachant que les branches (10, 13) écartées et orientées vers l'extérieur du profil en V, dépassent de l'épaisseur de la zone annulaire intérieure, au moins sur leurs extrémités,
**caractérisé en ce que**
le joint (12) et la bride (2, 9) sont faits dans le même matériau,
que les extrémités étanches des branches (10, 13) du profil en V présentent une section transversale circulaire ou quasi-circulaire et
que dans la position étanche du système de joint, les extrémités étanches des deux branches (10, 13) du joint (12) reposent en étanchéité sur un premier point de contact (3, 8) sur la première surface étanche définissant un premier point étanche ainsi que sur un second point de contact (4, 7) sur la seconde surface étanche définissant un autre point étanche, sachant qu'un espace intermédiaire respectif est présent entre les deux points de contact (3, 8 ; 4, 7) des branches (10, 13).

2. Système de joint selon la revendication précédente,
**caractérisé en ce que**
l'angle du profil en V fait entre 70° et 100°, de préférence 90°.

3. Système de joint selon la revendication 1 ou 2,
**caractérisé en ce que**
le joint (12) et la bride (2, 9) sont en acier normal ou en acier inox.

4. Système de joint selon l'une des revendications précédentes,
**caractérisé en ce que**
le joint (12) de type joint torique présente en outre une bague (14) placée au centre entre les deux branches (10, 13).
